# EUROPEAN PATENT APPLICATION

(11) **EP 4 723 059 A1**
(43) Date of publication of application: **08.04.2026**
(21) Application number: 25201811.4
(22) Date of filing: 12.09.2025
(51) Int. Cl.: G06V 20/58, B60R 1/27

(54) **DRIVING ASSISTANCE DEVICE**

(30) Priority: 03.10.2024 JP 2024174027
(71) Applicant: AISIN CORPORATION, Aichi 448-8650 (JP)
(72) Inventor: WATANABE, Kazuya, Kariya, Aichi 448-8650 (JP)
(74) Representative: TBK

(57) **Abstract**

A driving assistance device (1) includes: a vehicle surrounding image acquisition unit (10) configured to acquire a captured image obtained by capturing an image of surroundings of a vehicle (2) or an image obtained by processing the captured image, as a vehicle surrounding image in which the surroundings of the vehicle are visually recognized from a set viewpoint; an object detection unit (10) configured to detect an object of attention, which is an object present around the vehicle and requiring attention for the vehicle; a model image acquisition unit (10) configured to acquire a model image (55, 63 to 67) indicating an appearance of the object of attention; an assistance image generation unit (10) configured to generate an assistance image (60) in which the model image is synthesized with the vehicle surrounding image according to a position of the object of attention; and an image display unit (10) configured to display the assistance image on a display device (4). The image display unit displays the vehicle surrounding image excluding the model image such that a luminance difference or a contrast ratio with the model image included in the assistance image increases in a stepwise manner as a distance from the viewpoint increases.

## Description

### TECHNICAL FIELD

This disclosure relates to a driving assistance device that assists driving of a vehicle.

### BACKGROUND DISCUSSION

In the related art, various methods are used as an information providing method for providing an occupant of a vehicle with various types of information for assisting traveling of the vehicle, such as route guidance and warning of obstacles. Examples thereof include a display by a liquid crystal display provided in the vehicle and a sound output from a speaker. Here, there are areas that are blind spots around the vehicle which are difficult to be seen from a position of a driver, and to allow the driver to understand a situation in such blind spots, especially when performing special operations such as a parking operation or a garage-leaving operation, surrounding images captured by cameras provided in the vehicle are displayed on the liquid crystal display in the related art.

A technology has been proposed that, when displaying the vehicle surrounding image, if there is an object of attention around the vehicle, which requires attention for the vehicle, uses the vehicle surrounding image to make the user aware of the presence of the object of attention. For example, JP 2005-5978A discloses that a situation seen from a driver seat of a host vehicle is displayed using simple graphic drawing, and another vehicle or people present within a display range is rendered.

In JP 2005-5978A (paragraphs 0061 and 0062, Fig. 8) (Reference 1), as a result of rendering, a model image indicating an appearance of the object of attention is drawn in the vehicle surrounding image, but the vehicle surrounding image is not an actual view but a virtual landscape image reproduced by CG. Such a virtual landscape image can reproduce an approximate atmosphere on the spot, but lacks accuracy, and it is difficult to grasp the virtual landscape image in a linked manner with an actual landscape. Therefore, even when the model image is drawn in such a virtual landscape image, it may be difficult to grasp the position of the object of attention. In contrast, when the vehicle surrounding image in which the model image is drawn is a captured image of the camera, that is, an actual view, the drawn model image may be assimilated into the background due to the position and intensity of the light source, the color of the surrounding road surface or building, and the like, and it may be difficult for the user to visually recognize the model image.

A need thus exists for a driving assistance device that improves visibility of a model image indicating an object of attention when performing guidance to the object of attention by synthesizing and displaying the model image with a captured image obtained by capturing an image of surroundings of a vehicle.

### SUMMARY

According to an aspect of this disclosure, a driving assistance device includes a vehicle surrounding image acquisition unit configured to acquire a captured image obtained by capturing an image of surroundings of a vehicle or an image obtained by processing the captured image, as a vehicle surrounding image in which the surroundings of the vehicle are visually recognized from a set viewpoint; an object detection unit configured to detect an object of attention which is an object present around the vehicle and requiring attention for the vehicle; a model image acquisition unit configured to acquire a model image indicating an appearance of the object of attention; an assistance image generation unit configured to generate an assistance image in which the model image is synthesized with the vehicle surrounding image according to a position of the object of attention; and an image display unit configured to display the assistance image on a display device, in which the image display unit displays the vehicle surrounding image excluding the model image such that a luminance difference or a contrast ratio with the model image included in the assistance image increases stepwise as a distance from the viewpoint increases.

The "image obtained by processing the captured image" corresponds to, for example, an image obtained by synthesizing images captured by a plurality of cameras or an image obtained by performing viewpoint conversion on the captured image.

The "set viewpoint" corresponds to, for example, a position of an imaging unit when the captured image captured by the imaging unit is set as the vehicle surrounding image, and corresponds to the virtual viewpoint when the captured image is converted into an image visually recognized from a virtual viewpoint by performing viewpoint conversion.

According to the driving assistance device disclosed here having the above configuration, when the captured image obtained by capturing an image of the surroundings of the vehicle or the image obtained by processing the captured image is set as the vehicle surrounding image and the model image indicating the object of attention is synthesized and displayed to perform a guidance to the object of attention, the vehicle surrounding image is displayed such that the luminance difference or the contrast ratio with the model image included in the assistance image increases stepwise as the distance from the viewpoint increases, and thus it is possible to improve the visibility of the model image. As a result, it is possible to allow the user to more reliably recognize the object of attention around the vehicle.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to the present embodiment;
Fig. 2 is a block diagram illustrating a configuration of a driving assistance device according to the present embodiment;
Fig. 3 is a flowchart of a driving assistance processing program according to the present embodiment;
Fig. 4 is a diagram illustrating a method for converting a captured image into a bird's-eye view image;
Fig. 5 is a diagram illustrating a method for generating the bird's-eye view image;
Fig. 6 is a diagram illustrating an example of a model image;
Fig. 7 is a diagram illustrating an assistance image in which the bird's-eye view image is synthesized with the model image;
Fig. 8 is a diagram illustrating gradation processing on the bird's-eye view image; and
Fig. 9 is a diagram illustrating a direction of a gradation in the bird's-eye view image.

### DETAILED DESCRIPTION

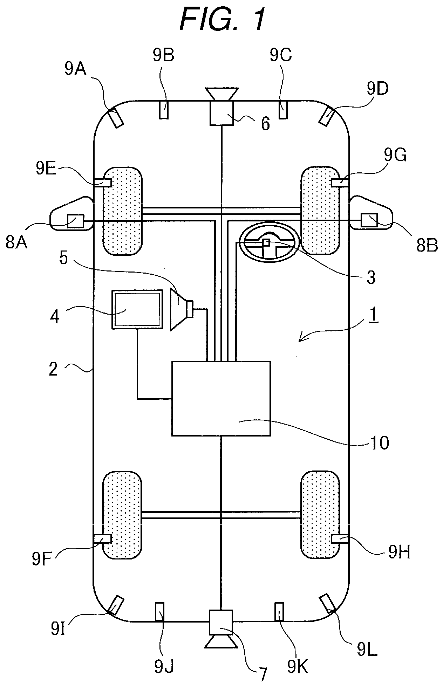

Hereinafter, a driving assistance device according to a specific embodiment disclosed here will be described in detail with reference to the drawings. First, a vehicle 2 equipped with a driving assistance device 1 according to the present embodiment will be described below. Fig. 1 is a schematic configuration diagram of the vehicle 2 according to the present embodiment.

Here, the vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. Regardless of a type of the vehicle, the vehicle 2 may be an ordinary vehicle, a large truck for commercial use, a bus, construction machinery, or the like. In the following description, a four-wheeled vehicle is used, and a two-wheeled or three-wheeled vehicle may be used.

The vehicle 2 is a vehicle capable of manual driving traveling in which the vehicle travels based on a driving operation of a user, as well as assisted traveling using autonomous driving assistance in which the vehicle travels automatically without the driving operation of the user.

The autonomous driving assistance may be performed only under a specific situation such as when parking or leaving a garage, may be performed for all road sections, or may be performed only while the vehicle travels on a specific road section (for example, a highway with a gate (manned or unmanned, paid or free) at a boundary). In the following description, an autonomous driving section in which the autonomous driving assistance of the vehicle is performed includes a parking lot in addition to all road sections including general roads and highways. The autonomous driving assistance is performed only in a situation in which the user selects to perform the autonomous driving assistance (for example, turns on an autonomous driving start button) and it is determined that traveling by the autonomous driving assistance is possible. In contrast, the vehicle 2 may be a vehicle that can only perform assisted traveling by the autonomous driving assistance. Alternatively, the vehicle 2 may perform the assisted traveling by the autonomous driving assistance only for traveling (that is, parking assistance) to a parking space when the vehicle is parked.

In vehicle control in the autonomous driving assistance according to the present embodiment, for example, a current position of the vehicle, a lane in which the vehicle travels, and positions of surrounding obstacles are detected at any time, and the vehicle control of a steering, a drive source, a brake, and the like is automatically performed such that the vehicle travels along a generated travel trajectory at a speed according to a speed plan generated in the same manner. In particular, when parking assistance is performed, the vehicle control is automatically performed in which the parking space, which is a target into which the vehicle is to be parked, and a surrounding situation are confirmed using detection results of a sensor or a camera, a parking trajectory to the parking space is calculated, the vehicle enters the parking space along the calculated parking trajectory, and the parking is completed. In addition to the normal parking assistance, the parking assistance also supports long-range parking, which involves parking in a distant parking space, such as a garage at home or a monthly contracted parking space in a parking lot. In the parking assistance for long-range parking, vehicle control is automatically performed to move the vehicle to a distant, preset parking space and complete parking. However, in the parking assistance, only a steering operation may be automatically performed, and the drive source and the brake may be controlled based on a manual operation. Alternatively, only guidance on the parking trajectory into the parking space or guidance on a vehicle operation may be performed, and a parking operation into the parking space may be manually performed by the user.

While the vehicle control of the steering, the drive source, the brake, and the like is automatically performed, an occupant of the vehicle can cancel the autonomous driving assistance at any timing by an own intention, and can stop the vehicle by executing a brake operation. When the autonomous driving assistance is performed, as will be described later, a captured image, which obtained by cameras capturing an image of the surroundings of the vehicle, is displayed on an in-vehicle display, and a guidance for warning an object of attention that requires attention for the vehicle is performed, and the occupant of the vehicle can stop the vehicle by stopping the autonomous driving assistance by performing the brake operation as necessary while visually recognizing the display.

As illustrated in Fig. 1, the vehicle 2 includes an operation unit 3 that receives an operation from the occupant, a liquid crystal display 4 that displays a bird's-eye view image or an overhead image of the surroundings of the vehicle and other information related to driving assistance to the occupant, a speaker 5 that outputs audio guidance related to the driving assistance, a front camera 6, a rear camera 7, and side cameras 8A and 8B that capture images of the surroundings of the vehicle, ultrasonic sensors 9A to 9L that detect obstacles around the vehicle, and a driving assistance electronic control unit (ECU) 10 that performs various types of arithmetic processing based on received information. The driving assistance device 1 includes the driving assistance ECU 10 and other components.

Hereinafter, the components included in the vehicle 2 will be described. First, the operation unit 3 is disposed, for example, on a front surface of a steering wheel and includes operation buttons and the like that are operated when the autonomous driving assistance is started. By operating the operation unit 3, the user can switch between the manual driving traveling in which the vehicle travels based on the driving operation of the user and the assisted traveling by the autonomous driving assistance in which the vehicle automatically travels without the driving operation of the user. The operation unit 3 may include a touch panel provided on a front surface of the liquid crystal display 4. A microphone and a voice recognition device may be further included.

The liquid crystal display 4 is a type of display device, is provided on an instrument panel of the vehicle 2, and displays a bird's-eye view image or an overhead image of the surroundings of the vehicle generated by performing viewpoint conversion and synthesis processing on captured images captured by cameras including the front camera 6, the rear camera 7, and the side cameras 8A and 8B during the execution of autonomous driving assistance. When there is an object of attention that requires attention for the vehicle around the vehicle 2, such as a pedestrian or another vehicle, a model image indicating an appearance of the object of attention is superimposed and displayed at a position of the object of attention in the bird's-eye view image or the overhead image. The liquid crystal display 4 may also be used in a navigation device.

The speaker 5 is provided on the instrument panel of the vehicle 2 and outputs a guidance voice, a warning sound, or the like related to the driving assistance. The speaker 5 may also be used in the navigation device.

The front camera 6 is, for example, an imaging device including a camera using a solid-state imaging element such as a CCD and is provided, for example, above a front bumper of the vehicle 2 or on a back side of a rear-view mirror with an optical axis direction thereof being directed to the front in the traveling direction of the vehicle.

The rear camera 7 is also an imaging device including a camera using a solid-state imaging element such as a CCD and is provided, for example, in the vicinity of an upper center of a license plate attached to the rear of the vehicle 2 with an optical axis direction thereof being directed to the rear of the vehicle.

The side cameras 8A and 8B are also imaging devices each including a camera using a solid-state imaging element such as a CCD and are attached to, for example, left and right side mirrors of the vehicle 2 with optical axis directions thereof being directed to lateral sides of the vehicle.

Then, the driving assistance ECU 10 performs the viewpoint conversion and the synthesis processing on the captured images captured by the cameras including the front camera 6, the rear camera 7, and the side cameras 8A and 8B to generate the bird's-eye view image and the overhead image of the surroundings of the vehicle. During the execution of the autonomous driving assistance, by performing image recognition processing on the captured image, a partition line or an obstacle (another vehicle, a pedestrian, a bicycle, a wall, a guard rail, and other structures) around the vehicle is detected, and the autonomous driving assistance is executed based on a detection result thereof. In particular, when parking assistance is performed, the detection result of the obstacle obtained by the cameras is also used to confirm the parking space and the surrounding situation.

The ultrasonic sensors 9A to 9L are disposed at predetermined intervals on a front portion, a rear portion, and side portions of the vehicle, and transmit ultrasonic waves as probe waves to the surroundings of the vehicle 2 and receive reflected waves of the transmitted probe waves reflected by objects around the vehicle, thereby detecting the objects that reflect the probe waves. Specifically, the ultrasonic sensors 9A to 9L are of a type of distance measurement sensor that can detect a distance (distance measurement value) to the object that reflects the probe wave by measuring a time from the transmission to the reception. The ultrasonic sensors 9A to 9L can generate an output signal (including the distance to the detected object) corresponding to a reception result of the received wave and output the output signal to a control unit. Examples of an object serving as a detection target by the ultrasonic sensors 9A to 9L include an obstacle that needs to be avoided when the vehicle 2 travels, such as a person, a bicycle, another vehicle, and a wall, and an obstacle that forms the parking space. As the distance measurement sensor, a millimeter wave sensor or a laser sensor may be used instead of the ultrasonic sensor.

Installation positions and the installation directions of the respective ultrasonic sensors 9A to 9L can be set as appropriate. In the present embodiment, to set a detection range of the object to all orientations including the front, rear, and left and right directions of the traveling direction of the vehicle 2, the ultrasonic sensors 9A to 9D are provided on a front side of the vehicle 2 being directed to the traveling direction such that a transmission direction of the probe wave is forward in the traveling direction of the vehicle. The ultrasonic sensors 9E and 9F are provided on a left side surface of the vehicle 2 being directed to a left direction such that the transmission direction of the probe wave is leftward in the traveling direction of the vehicle. The ultrasonic sensors 9G and 9H are provided on a right side surface of the vehicle 2 being directed to a right direction such that the transmission direction of the probe wave is rightward in the traveling direction of the vehicle. The ultrasonic sensors 9I to 9L are provided on a rear surface of the vehicle 2 being directed to a direction opposite to the traveling direction such that the transmission direction of the probe wave is toward the rear of the vehicle. The ultrasonic sensors 9A to 9L have substantially the same height from a ground surface.

In the present embodiment, among the ultrasonic sensors 9A to 9L, in particular, the ultrasonic sensors 9A to 9D on the front surface of the vehicle 2 and the ultrasonic sensors 9I to 9L on the rear surface of the vehicle 2 are provided at positions at which reflected waves can be received as indirect waves between adjacent sensors. Therefore, it is possible to specify not only the distance to the object but also a specific position (a relative position with respect to the vehicle) of the object using triangulation by receiving direct waves and indirect waves as received waves. Although the ultrasonic sensors 9E to 9H on the lateral sides cannot receive indirect waves because they are provided apart from one another, a specific position (a relative position with respect to the vehicle) of the object can also be specified by triangulation using a measured distance of a previous position, a measured distance of a current position, and a movement distance therebetween as the vehicle moves.

The driving assistance ECU 10 is an electronic control unit that performs various types of processing related to the autonomous driving assistance. For example, the current position of the vehicle, the lane in which the vehicle travels, and the positions of surrounding obstacles are detected at any time, and the vehicle control of a steering, a drive source, a brake, and the like is performed such that the vehicle travels along a generated travel trajectory at a speed according to a speed plan generated in the same manner. In particular, when parking assistance is performed, the vehicle control is performed in which the parking space, which is a target into which the vehicle is to be parked, and a surrounding situation are confirmed using detection results of the front camera 6, the rear camera 7, the side cameras 8A and 8B, and the ultrasonic sensors 9A to 9L, a parking trajectory to the parking space is calculated, the vehicle enters the parking space along the calculated parking trajectory, and the parking is completed. In contrast, when performing parking assistance for long-range parking, vehicle control is performed in which a parking trajectory including movement to a distant parking space that is registered in advance is calculated, such as a garage at home or a monthly contracted parking space in a parking lot, the vehicle enters the parking space along the calculated parking trajectory, and parking is completed. The bird's-eye view image or the overhead image of the surroundings of the vehicle generated from the captured image of the camera described above is displayed on the liquid crystal display 4, and in particular, when there is an object of attention that requires attention for the vehicle such as a pedestrian or another vehicle around the vehicle 2, the model image indicating the appearance of the object of attention is superimposed and displayed at the position of the object of attention in the bird's-eye view image or the overhead image, or a warning sound is output. The driving assistance ECU 10 is connected to the operation unit 3, the liquid crystal display 4, the speaker 5, the front camera 6, the rear camera 7, the side cameras 8A and 8B, and the ultrasonic sensors 9A to 9L described above via an in-vehicle network such as a CAN. The driving assistance ECU 10 is also connected to various sensors such as a vehicle speed sensor, an acceleration sensor, a gyro sensor, a steering sensor, and a shift position sensor mounted on the vehicle 2, a navigation device as an in-vehicle device, and the like. A detailed configuration of the driving assistance ECU 10 will be described later.

In addition to the components illustrated in Fig. 1, the vehicle 2 includes basic components as the vehicle 2. However, only a configuration related to control of the autonomous driving assistance and control related to the configuration will be described.

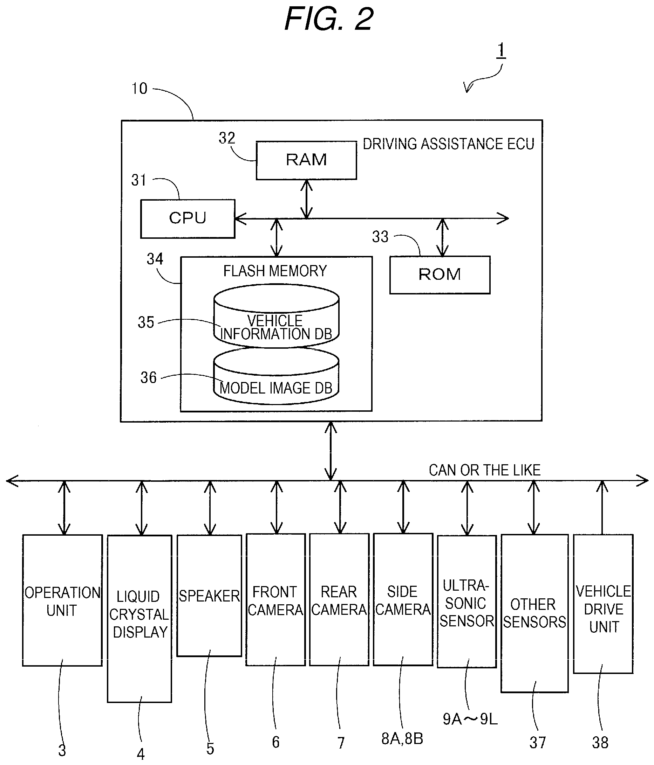

Next, the driving assistance ECU 10 of the driving assistance device 1 included in the vehicle 2 will be described in detail. Fig. 2 is a block diagram illustrating a configuration of the driving assistance device 1 according to the present embodiment.

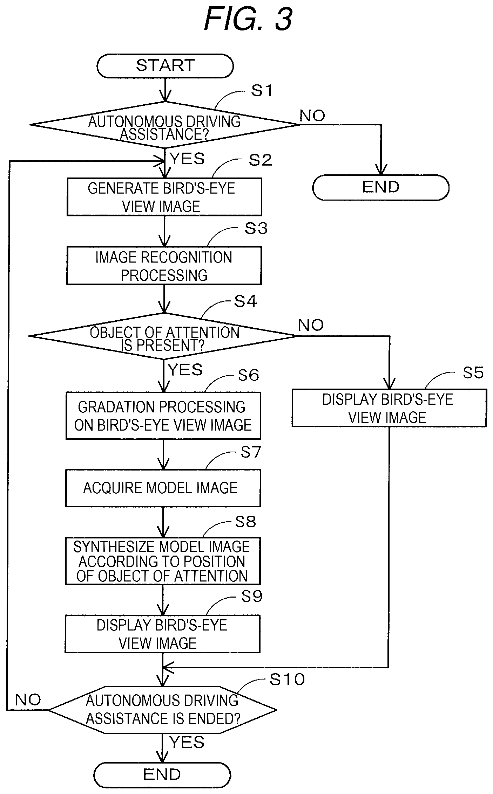

As illustrated in Fig. 2, the driving assistance ECU 10 is an electronic control unit that performs overall control of the driving assistance device 1, and includes a CPU 31 serving as an arithmetic device and a control device and internal storage devices such as a RAM 32 that is used as a working memory when the CPU 31 performs various types of arithmetic processing and that stores, for example, travel trajectory data when the travel trajectory is calculated, a ROM 33 in which, for example, a driving assistance processing program (see Fig. 3) to be described later is recorded in addition to control programs, and a flash memory 34 that stores a program read from the ROM 33. The driving assistance ECU 10 includes various units as processing algorithms. For example, the vehicle surrounding image acquisition unit acquires a captured image obtained by capturing an image of the surroundings of the vehicle or an image obtained by processing the captured image, as a vehicle surrounding image in which the surroundings of the vehicle are visually recognized from a set viewpoint. An object detection unit detects an object of attention that is present around the vehicle and is an object requiring attention for the vehicle. A model image acquisition unit acquires a model image indicating an appearance of the object of attention. An assistance image generation unit generates an assistance image in which the model image is synthesized with the vehicle surrounding image according to a position of the object of attention. An image display unit displays the assistance image on the liquid crystal display 4. A vehicle speed acquisition unit acquires a vehicle speed of the vehicle. That is, the driving assistance ECU 10 is an example of the vehicle surrounding image acquisition unit, the object detection unit, the model image acquisition unit, the assistance image generation unit, the image display unit, and the vehicle speed acquisition unit.

The driving assistance ECU 10 is also connected to various sensors 37 for detecting behaviors of the vehicle, such as a vehicle speed sensor, a wheel speed sensor, an acceleration sensor, a gyro sensor, a steering sensor, and a shift position sensor, and a drive unit 38 of the vehicle, such as a steering wheel, a brake, an accelerator, and a transmission. A current behavior of the vehicle is detected based on detection results of these sensors 37, and the autonomous driving assistance for the vehicle 2 is performed by controlling the drive unit 38. As specific contents of autonomous driving assistance, for example, the current position of the vehicle, the lane in which the vehicle travels, and the positions of surrounding obstacles are detected at any time, and the vehicle control of a steering, a drive source, a brake, and the like is performed such that the vehicle travels along a generated travel trajectory at a speed according to a speed plan generated in the same manner. However, only a steering operation may be automatically performed, and the drive source and the brake may be controlled based on a manual operation.

The flash memory 34 includes a vehicle information DB 35 and a model image DB 36. The vehicle information DB 35 stores various types of information related to the vehicle 2. For example, installation positions (heights from the ground surface and positions in a left-right direction) and detection axes (optical axes with the camera) of the cameras and the ultrasonic sensors 9A to 9L provided in the vehicle 2, a total length, a vehicle width, a wheelbase, a minimum turning radius, and the like are stored. Such pieces of information are input in advance by the occupant or a person on a vehicle manufacturer side.

Meanwhile, in the model image DB 36, various types of information used when drawing a 3D model image indicating an appearance of a person or a vehicle (including motorcycles) are stored. Here, in the present embodiment, an object that can take at least one of a moving state and a stopped state, that is, an object that moves or stops instead of a fixed object such as a wall or a utility pole is defined as an object of attention that requires attention for the vehicle. A person or a vehicle whose model image is stored in the model image DB 36 is an example of the object of attention. However, the object of attention is not limited to a person or a vehicle, and may include, for example, a vehicle and an electric kick scooter. In this case, information used when drawing a 3D model image indicating an appearance of a bicycle or an electric kick scooter is also stored in the model image DB 36.

As various types of information used when drawing the 3D model image indicating the appearance of a person or a vehicle, the model image DB 36 stores information necessary for executing processing of creating a 3D CG such as modeling, scene layout setting, and rendering, a texture image to be attached to a created 3D CG model, and the like. The model image DB 36 may store a model image in a completed state that indicates the appearance of a person or a vehicle, and in this case, only one type of model image may be used for each type of the object of attention, or a plurality of model images may be prepared for each type. For example, different model images may be prepared for a child and an adult in the case of a person, and for each vehicle type (light automobile, standard-sized automobile, truck, and the like) in the case of a vehicle. However, in the following description, only one type of model image is used for each type of object of attention.

Next, the driving assistance processing program executed by the driving assistance ECU 10 in the driving assistance device 1 having the above-described configuration will be described with reference to Fig. 3. Fig. 3 is a flowchart of the driving assistance processing program according to the present embodiment. Here, the driving assistance processing program is a program that is executed after an accessory (ACC) power supply of the vehicle 2 is turned on and supports the user by using a bird's-eye view image or an overhead image of the surroundings of the vehicle while the autonomous driving assistance of the vehicle is performed. However, in the following description, an example of providing assistance to the user using a bird's-eye view image will be particularly described.

In the following embodiment, the bird's-eye view image of the surroundings of the vehicle is displayed while the autonomous driving assistance of the vehicle is performed, but it is not necessary to display the bird's-eye view image of the surroundings of the vehicle only while the autonomous driving assistance is performed, and the bird's-eye view image of the surroundings of the vehicle may be displayed even while the vehicle is traveling by manual driving. Alternatively, the bird's-eye view image of the surroundings of the vehicle may be displayed only while specific autonomous driving assistance, such as parking assistance for long-range parking, is performed. The program illustrated in the flowchart in Fig. 3 is stored in the RAM 32 or the ROM 33 included in the driving assistance device 1 and is executed by the CPU 31.

First, in step (hereinafter abbreviated as S) 1, the CPU 31 determines whether assisted traveling by the autonomous driving assistance is performed. As described above, a determination condition may be that specific autonomous driving assistance, such as parking assistance, is performed.

In the present embodiment, the assisted traveling by the autonomous driving assistance is performed in a situation in which the user operates the operation unit 3 to select to perform the autonomous driving assistance and it is determined that the vehicle can travel by the autonomous driving assistance. As contents of the autonomous driving assistance, for example, the current position of the vehicle, the lane in which the vehicle travels, and the positions of surrounding obstacles are detected at any time, and the vehicle control of a steering, a drive source, and a brake is automatically performed such that the vehicle travels along a generated travel trajectory at a speed according to a speed plan generated in the same manner. In particular, in the case of parking assistance, the vehicle control until parking in a parking space is automatically performed. However, only a steering operation may be automatically performed, and the drive source and the brake may be controlled based on a manual operation.

Then, if it is determined that the assisted traveling by the autonomous driving assistance is performed (YES in S1), the processing proceeds to S2. On the other hand, if it is determined that the assisted traveling by the autonomous driving assistance is not performed (NO in S1), the driving assistance processing program is ended.

The following processing is performed for each of the images captured by the front camera 6, the rear camera 7, and the side cameras 8A and 8B. For example, since the front camera 6, the rear camera 7, and the side cameras 8A and 8B according to the present embodiment have a frame rate of 30 fps (capturing 30 images per second), the most recently captured image is acquired every 33 ms, and the following processing is performed on the acquired image.

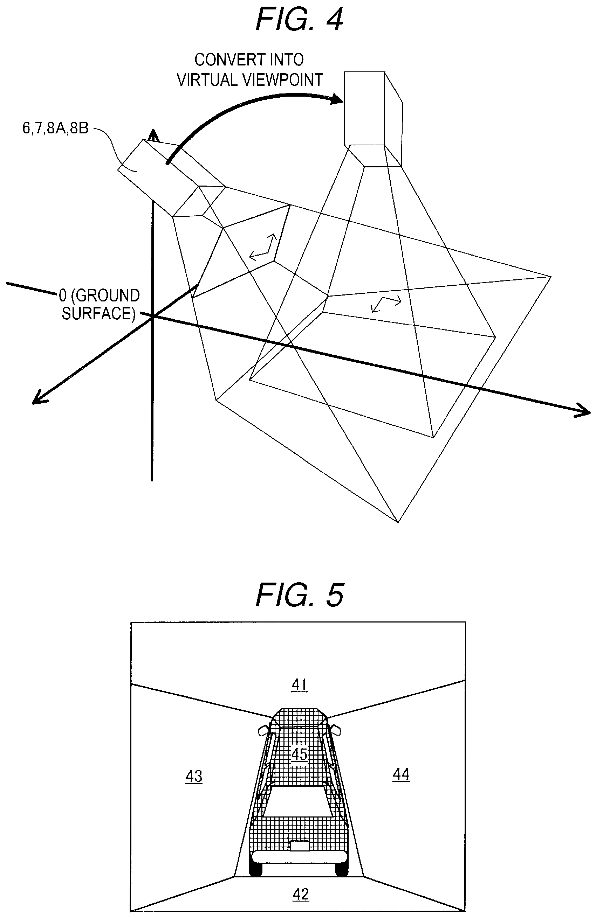

In S2, the CPU 31 generates a bird's-eye view image of the surroundings of the vehicle viewed obliquely downward from the sky based on a real-time captured image captured by the front camera 6, the rear camera 7, and the side cameras 8A and 8B. In the following description, a method for generating a bird's-eye view image looking down on the front of the vehicle will be described below. As illustrated in Fig. 4, the real time captured image captured by each camera is projected onto a virtual projection surface that is a horizontal plane corresponding to a height from the ground surface, and the captured image projected onto the virtual projection surface is converted into an image viewed from a virtual viewpoint looking down obliquely from above the vehicle 2 in the forward direction of traveling direction, thereby generating a bird's-eye view image of each camera. The conversion (viewpoint conversion) to the image viewed from the virtual viewpoint is performed by first converting each coordinate in a captured image coordinate system set along a surface perpendicular to the optical axis of the camera, into each coordinate in a ground surface coordinate system set along the ground surface, and then converting each coordinate into each coordinate in a bird's-eye view image coordinate system. Conversion formulas used for coordinate conversion are already known, and therefore, the description thereof will be omitted. Then, as illustrated in Fig. 5, a bird's-eye view image 41 obtained by converting the viewpoint of the captured image captured by the front camera 6, a bird's-eye view image 42 obtained by converting the viewpoint of the captured image captured by the rear camera 7, a bird's-eye view image 43 obtained by converting the viewpoint of the captured image captured by the side camera 8A, and a bird's-eye view image 44 obtained by converting the viewpoint of the captured image captured by the side camera 8B are synthesized (connected), and a host vehicle image 45 schematically indicating the host vehicle is inserted between the bird's-eye view images 41 to 44 to generate the bird's-eye view image. The virtual viewpoint of the bird's-eye view image may be in the vehicle (that is, a viewpoint of the occupant). Although the bird's-eye view image illustrated in Fig. 5 includes the bird's-eye view image 42 obtained by converting the viewpoint of the captured image captured by the rear camera 7, the bird's-eye view image 42 obtained by converting the viewpoint of the captured image captured by the rear camera 7 may be excluded from the synthesis targets when only the front of the vehicle is displayed. As the bird's-eye view image, a bird's-eye view image in which the rear of the vehicle is obliquely looked down is generated when the vehicle moves backward.

Next, in S3, the CPU 31 performs the image recognition processing on the bird's-eye view image generated in S2 to detect the object of attention included in the bird's-eye view image. Here, as described above, the object of attention can take at least one of the moving state and the stopped state, requires attention for the host vehicle, and corresponds to, for example, a person or another vehicle. In the present embodiment, the image recognition processing is performed on the bird's-eye view image generated in S2, but the image recognition processing may be performed on a captured image of a camera, which is a synthesis source of the bird's-eye view image.

As processing of detecting the object of attention from the bird's-eye view image in S3, for example, it is possible to perform luminance correction based on a luminance difference between the road surface and the object of attention, and then detect a boundary line between the road surface and the object of attention by performing binarization processing of separating the object of attention from the image, geometric processing of correcting a distortion, and smoothing processing of removing a noise in the image. Detection may be performed using known template matching processing or feature point detection processing. The image recognition processing on the captured image is not limited to the above example, and may be performed using, for example, machine learning.

In addition to the image recognition processing, the ultrasonic sensors 9A to 9L may also be used to detect the object of attention. In the detection by the ultrasonic sensors 9A to 9L, although the position of the object around the vehicle can be specified, the type of the detected object, that is, whether the detected object corresponds to the object of attention cannot be basically identified, but for example, when the object moves, the object can be estimated as the object of attention. The type of the object detected by the ultrasonic sensors 9A to 9L may be identified by using cameras in combination.

Thereafter, in S4, the CPU 31 determines whether there is an object of attention in the bird's-eye view image generated in S2 as a result of the image recognition in S3. In particular, when the object of attention is located near the synthesis boundary of the captured image, the object of attention which is actually present may disappear in the generated bird's-eye view image, but if it is possible to detect that the object of attention is located within the display range of the bird's-eye view image, the object of attention is included in the bird's-eye view image even when the object of attention is not displayed.

Then, if it is determined that the object of attention is included in the bird's-eye view image generated in S2 (YES in S4), the processing proceeds to S6. On the other hand, if it is determined that the object of attention is not included in the bird's-eye view image generated in S2 (NO in S4), the processing proceeds to S5.

In S5, the CPU 31 displays, on the liquid crystal display 4, the real-time bird's-eye view image, which is generated in S2 and indicates the current environment around the vehicle, as an assistance image for assisting the automatic driving of the vehicle. However, in addition to the bird's-eye view image, an overhead image looking vertically downward from a viewpoint located above may be displayed. Alternatively, the bird's-eye view image and the overhead image may be switched and displayed by a user operation. Thereafter, the processing proceeds to S10.

In S6, the CPU 31 performs image processing (hereinafter, referred to as gradation processing) on the real time bird's-eye view image, which is generated in S2 and indicates the current environment around the vehicle, that is, the bird's-eye view image excluding a model image 55 to be described later from the assistance image finally displayed in S9 to be described later, such that a color becomes a single color in a stepwise manner as a distance from the virtual viewpoint of the bird's-eye view image increases. The single color is a color having a luminance difference or a contrast ratio with a display color of the model image 55 to be described later, equal to or larger than a threshold. For example, when the display color of the model image 55 is white, the single color is black or a color close to black. As a result, the luminance difference or the contrast ratio with the model image 55 included in the assistance image increases stepwise as the distance from the virtual viewpoint of the bird's-eye view image increases. Then, the model image 55 can stand out without being assimilated with the background.

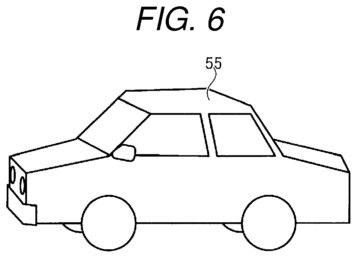

Next, in S7, the CPU 31 acquires the model image 55 indicating the appearance of the object of attention included in the bird's-eye view image. Here, the model image 55 is a three-dimensional polygon image. For example, Fig. 6 illustrates the model image 55 of a vehicle and is a 3D image indicating the appearance of the vehicle. The model image 55 may be, for example, a "wire frame model" that displays only sides or a "surface model" that displays surfaces. The model image 55 illustrated in Fig. 6 has a shape that enables identification of a vehicle and enables identification of at least a front-rear direction of the vehicle, but may have a simple shape that makes identification of the front-rear direction difficult. With such a simple shape, when the model image 55 is synthesized with the bird's-eye view image to be described later, a sense of discomfort is not given even when an actual orientation of the vehicle and an orientation of the model image 55 are different from each other.

A display color, a luminance, and an intensity of shading of the model image 55 are appropriately adjusted and set to be easily seen by the user even when being synthesized with the bird's-eye view image as described later. Specifically, adjustment is performed to distinguish from the bird's-eye view image serving as the background, and the display color is, for example, white, yellow, or red.

Various materials may be set, and mapping processing may be performed on the model image 55. Examples of the mapping processing include texture mapping in which an image of a texture is attached to a surface of an object, and bump mapping in which a reflection direction of light is changed to form fine irregularities. For example, the texture image is an image in which effects such as shading, transmission, and reflection are drawn, and each effect of the texture image is drawn not to be unnatural in consideration of an arrangement orientation, surrounding brightness, a position of a light source (for example, sunlight or street light), and the like when the model image 55 is arranged in the bird's-eye view image in S8 to be described later.

In S7, the CPU 31 may create the model image 55 illustrated in Fig. 6 by executing processing such as modeling, scene layout setting, and rendering by using the information stored in the model image DB 36, or may acquire the model image 55 by storing the model image 55 completed in advance in the model image DB 36 and reading the model image 55 from the model image DB 36 in S7. When the model image 55 is created, it is desirable that the type of the objects of attention included in the bird's-eye view image is determined by the above-described image recognition processing, and the model image 55 of the corresponding type is created. In contrast, when the model image 55 is read, it is desirable that a plurality of model images 55 are stored in the model image DB 36 in advance for each type of the object of attention, the type of the object of attention included in the bird's-eye view image is similarly determined by the above-described image recognition processing, and the model image 55 of the corresponding type is read.

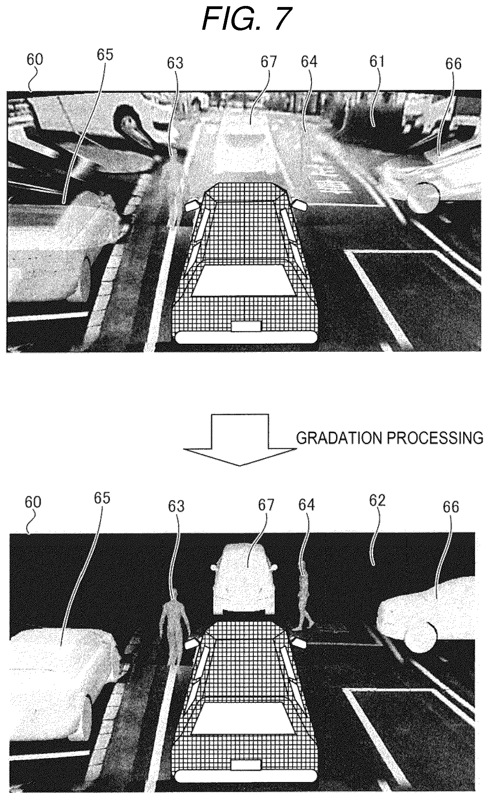

Thereafter, in S8, the CPU 31 synthesizes the model image 55 acquired in S7 according to the position of the object of attention included in the bird's-eye view image. That is, the model image 55 is synthesized to be superimposed on the actual object of attention. However, as a problem of the related art, when a bird's-eye view image or an overhead image is generated by changing a viewpoint of a captured image captured by a camera, a three-dimensional object in the captured image may be displayed in a distorted or extended manner with respect to an original shape. For example, in the example illustrated in Fig. 7, a part of the vehicle is displayed in an extended manner in a vertical direction, making it difficult for the user to grasp the shape of the vehicle even when viewing the bird's-eye view image. Therefore, when synthesizing the model image 55, it is desirable to perform the synthesis such that a ground contact point of the road surface and object of attention is aligned with a ground contact point of the road surface and the model image 55 instead of aligning a whole object of attention included in the bird's-eye view image. Alternatively, it is also possible to measure position coordinates (a relative position with respect to the host vehicle) at which the object of attention is present and synthesize the model image 55 at the measured position coordinates. In particular, when object of attention is located near the synthesis boundary of the captured image, the object of attention which is actually present may disappear in the generated bird's-eye view image, but by synthesizing the model image 55 according to the position coordinates, it is possible to superimpose the model image 55 according to the position of the object of attention which is not displayed but is actually present. The bird's-eye view image after the model image 55 is synthesized is hereinafter referred to as an assistance image 60.

In S7, the CPU 31 performs editing including at least one of enlargement, reduction, and rotation of the model image 55, when synthesizing the model image 55. Specifically, first, the model image 55 is enlarged or reduced according to the position of the object of attention detected by the image recognition processing in S3. Specifically, the closer the object of attention is located from the virtual viewpoint of the bird's-eye view image, the larger the model image 55 becomes, and conversely, the farther the object of attention is located from the virtual viewpoint of the bird's-eye view image, the smaller the model image 55 becomes. For example, in the case of the model image 55 of a person, the model image 55 is adjusted to have a size assuming the average height of a human being as seen from the virtual viewpoint. In the case of the model image 55 of a vehicle, the model image 55 is adjusted to have a size assuming the standard size of a vehicle as seen from the virtual viewpoint. If the shape of the object of attention included in the bird's-eye view image can be accurately specified, the size may be adjusted to match the actual size. Alternatively, when the object of attention is another vehicle, the size may be adjusted such that the interval between another vehicle and the tire included in the bird's-eye view image matches. Rotation processing is also performed according to the position of the virtual viewpoint and the line-of-sight direction of the bird's-eye view image. That is, the angle is adjusted such that the model image 55 can be seen from the virtual viewpoint assuming that the model image 55 is located on the road surface at the same position as the object of attention. When the object of attention is another vehicle, an orientation of another vehicle (an orientation of another vehicle with respect to the orientation of the host vehicle) is detected, and the model image 55 is subjected to the rotation processing according to the detected orientation of another vehicle.

A transmittance of the model image 55 is also set. Basically, the model image 55 to be synthesized with the bird's-eye view image is an opaque image having a transmittance of 0%, and a range of a real image to be superimposed cannot be visually recognized. However, the model image 55 may be a semi-transparent image. In this case, it is possible to allow the user to visually recognize the object of attention in the actual image.

When a plurality of objects of attention are included in the bird's-eye view image, the processing of S7 and S8 is performed for each object of attention.

However, in the present embodiment, the model image 55 is synthesized (S8) with the bird's-eye view image subjected to the gradation processing (S6), but the gradation processing may be performed after the model image 55 is synthesized with the bird's-eye view image by reversing the processing order.

Here, Fig. 7 is a diagram illustrating a comparison between the assistance image 60 including a bird's-eye view image 61 when the gradation processing of S6 is not performed and the assistance image 60 including a bird's-eye view image 62 when the gradation processing of S6 is performed. In the example illustrated in Fig. 7, it is assumed that a person located on the left front side of the host vehicle, a person located on the right front side of the host vehicle, another vehicle located on the left side of the host vehicle, another vehicle located on the right front side of the host vehicle, and another vehicle located in front of the host vehicle are detected as the objects of attention. As a result, a model image 63 indicating a person is superimposed and displayed on the person located on the left front side of the host vehicle, a model image 64 indicating a person is superimposed and displayed on the person located on the right front side of the host vehicle, a model image 65 indicating a vehicle is superimposed and displayed on another vehicle located on the left side of the host vehicle, a model image 66 indicating a vehicle is superimposed and displayed on another vehicle located on the right front side of the host vehicle, and a model image 67 indicating a vehicle is superimposed and displayed on another vehicle located in front of the host vehicle.

As illustrated in Fig. 7, in the assistance image 60 on which the gradation processing is not performed, the model images 63 to 67 are assimilated with the bird's-eye view image 61 serving as the background, and the model images 63 to 67 are difficult for the user to see. In particular, in a daytime time period in which light from the sun is strong, the luminance of the background increases due to the influence of sunlight, and it is expected that the model images 63 to 67 become more difficult to see. Even when display colors, luminance, shading, and the like of the model images 63 to 67 are adjusted, it is difficult to achieve a significant improvement.

In contrast, in the assistance image 60 subjected to the gradation processing, as described above, the luminance difference or the contrast ratio between the bird's-eye view image 62 serving as the background and the model images 63 to 67 increases stepwise as the distance from the virtual viewpoint of the bird's-eye view image increases. Therefore, the model images 63 to 67 stand out without being assimilated with the bird's-eye view image 62 serving as the background, and the user can easily grasp the model images 63 to 67. In particular, even in a daytime time period in which light from the sun is strong, the model images 63 to 67 can be visually recognized without being affected by the light.

As a specific processing method of the gradation processing performed by the CPU 31 on the bird's-eye view image described above, for example, the following processing method is conceivable.

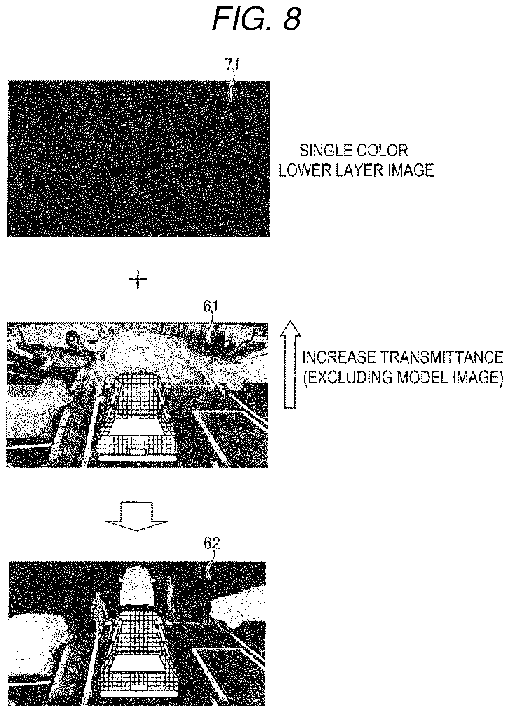

As a first method, as illustrated in Fig. 8, a base image 71 of a single color (for example, black) is first drawn as a lower layer, and the bird's-eye view image 61 is drawn on an upper layer overlapping the base image 71. Then, the transmittance of the bird's-eye view image 61 (excluding the model images 63 to 67 to be synthesized later) is gradually increased toward the top of the image, that is, toward a far side from the virtual viewpoint. As a result, the bird's-eye view image 61 excluding the model images 63 to 67 becomes the bird's-eye view image 62 having a single color in a stepwise manner as the distance from the virtual viewpoint increases. In the first method, a single color other than black can be handled by changing the color of the base image 71.

As a second method, the luminance of the bird's-eye view image 61 (excluding the model images 63 to 67 to be synthesized later) is gradually decreased toward the top of the image, that is, toward the far side from the virtual viewpoint. As a result, the bird's-eye view image 61 excluding the model images 63 to 67 becomes the bird's-eye view image 62 that approaches stepwise black (luminance 0) as the distance from the virtual viewpoint increases. In the second method, the single color is substantially limited to only black, but the method can be implemented only by the processing of adjusting the luminance of the image, and therefore, the processing load is reduced.

As a third method, first, the bird's-eye view image 61 (excluding the model images 63 to 67 to be synthesized later) is drawn as a lower layer, and a gradation image that gradually shifts to a single color toward the top of the image, that is, toward a far side from the virtual viewpoint is drawn on the image. As a result, the bird's-eye view image 61 excluding the model images 63 to 67 becomes the bird's-eye view image 62 having a single color in a stepwise manner as the distance from the virtual viewpoint increases.

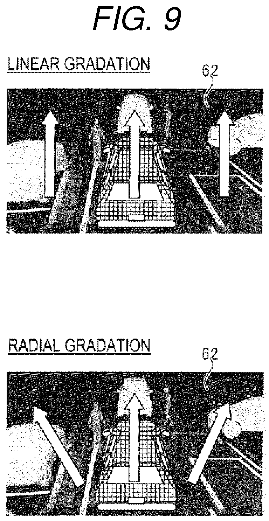

When changing the bird's-eye view image to a single color in a stepwise manner, as illustrated in the upper diagram of Fig. 9, the degree of transition to a single color may be determined by a linear gradation in which the bird's-eye view image is linearly changed from the lower side to the upper side of the screen, in other words, based on the distance from the lower end of the screen. Alternatively, as illustrated in the lower diagram of Fig. 9, the degree of transition to a single color may be determined by a radial gradation in which the bird's-eye view image is changed in an arc shape (diffusion direction) from the center of the lower part of the screen (that is, the position of the virtual viewpoint) toward upward and the left-right direction, in other words, based on a distance from the center of the lower end of the screen. In any cases, a single color is displayed in a stepwise manner as the distance from the virtual viewpoint increases, but when the bird's-eye view image is changed particularly by the radial gradation, it is possible to improve the visibility of the model image corresponding to the object of attention located on the right side or the left side with respect to the host vehicle.

When the gradation as illustrated in Fig. 9 is performed, the position at which the gradation starts in the bird's-eye view image, that is, a display start position at which the display is performed such that the luminance difference or the contrast ratio with the model image increases can be switched according to the vehicle speed of the vehicle. Specifically, the CPU 31 acquires the current vehicle speed of the vehicle from the vehicle speed sensor, and sets the position at which the gradation starts in the bird's-eye view image based on the vehicle speed of the vehicle. Specifically, the faster the vehicle speed is, the more attention needs to be paid to the object of attention in a wider range. Therefore, it is desirable to set the position at which the gradation starts (the display start position at which the display is performed such that the luminance difference or the contrast ratio with the model image increases) to a position closer to the virtual viewpoint, and to widen the display range such that the luminance difference or the contrast ratio with the model image increases.

Then, in S9, the CPU 31 displays, on the liquid crystal display 4, an image obtained by synthesizing the model image 55 with the real time bird's-eye view image 62, which is subjected to the gradation processing in S6 and indicates the current environment around the vehicle, as the assistance image 60 for assisting the automatic driving of the vehicle.

As described above, since the processing in S2 and subsequent steps is repeatedly executed for the most recently captured image and the assistance image 60 displayed on the liquid crystal display 4 is also updated in real time, when the object of attention moves, the position of the model image 55 included in the assistance image 60 also moves in the surrounding image (in the scenery) according to the movement. On the other hand, when the object of attention is in the stopped state, the position of the model image 55 included in the assistance image 60 is also fixed in the surrounding image (however, when the host vehicle moves, the position of the virtual viewpoint changes, and therefore the position of the model image on the screen changes).

Here, in general, in the bird's-eye view image, a person or another vehicle present around the host vehicle may be largely enlarged or displayed in a distorted manner, and it may be difficult to grasp the presence or the position of the person or another vehicle. However, in the assistance image 60 according to the present embodiment, as illustrated in Fig. 7, the model images 63 and 64 imitating the person are superimposed and displayed at the positions of the persons, allowing the user to clarify and grasp the presence and the position of the person. Similarly, the model images 65 to 67 imitating another vehicle are superimposed and displayed at the positions of another vehicle, allowing the user to clarify and grasp the presence and the position of another vehicle. In particular, when a person or a vehicle is located near the synthesis boundary of the captured image, the person or the vehicle which is actually present may disappear in the generated bird's-eye view image, but even in this case, by displaying the model images 63 to 67, it is possible to allow the user to grasp the presence and the position of the person or another vehicle. The assistance image 60 displayed on the liquid crystal display 4 enables the user to clearly understand the relative relationship with the host vehicle position, including areas that are difficult to visually recognize directly, and to grasp the environment around the vehicle. The CPU 31 may calculate a future movement trajectory of the vehicle based on a detection value of a vehicle speed sensor, a steering sensor, or the like, and display the movement trajectory superimposed on the assistance image 60. Thereafter, the assistance image is continuously displayed until the assisted traveling by the autonomous driving assistance is ended (YES in S10).

The CPU 31 can also acquire the current vehicle speed of the vehicle from the vehicle speed sensor, and switch the position of the virtual viewpoint of the vehicle surrounding image displayed on the liquid crystal display 4 and the line-of-sight direction from the virtual viewpoint according to the vehicle speed of the vehicle. Specifically, the faster the vehicle speed is, the more attention needs to be paid to the more distant object of attention. Therefore, the position of the virtual viewpoint when the bird's-eye view image is generated in S2 is set to a position closer to the road surface, and the line-of-sight direction approaches a horizontal direction. Accordingly, a display area of the bird's-eye view image can include an area farther from the host vehicle. On the other hand, when the vehicle speed is low, it is necessary to pay particular attention to an object of attention near the host vehicle. Therefore, the position of the virtual viewpoint when the bird's-eye view image is generated in S2 is set to a position above the road surface, and the line-of-sight direction is brought closer to the vertically downward direction. In particular, when the vehicle speed is low, the image may be switched to an overhead image viewed from directly above.

In addition to the vehicle speed of the vehicle, the position of the virtual viewpoint and the line-of-sight direction from the virtual viewpoint can be similarly switched depending on the distance to the object of attention. For example, when the distance to the object of attention is within a predetermined distance, the vehicle surrounding image displayed on the liquid crystal display 4 may be switched from the bird's-eye view image to the overhead image.

Even during the autonomous driving assistance, the occupant of the vehicle can cancel the autonomous driving assistance at any timing by an own intention, and can stop the vehicle by executing the brake operation. The occupant of the vehicle can stop the autonomous driving assistance and stop the vehicle by performing the brake operation as necessary while visually recognizing the assistance image 60 displayed on the liquid crystal display 4.

Thereafter, in S10, the CPU 31 determines whether to end the assisted traveling by the autonomous driving assistance. Here, for example, a condition for ending the assisted traveling by the autonomous driving assistance is, for example, in the case of parking assistance, completion of parking in a parking space. The condition may be that the user performs a predetermined end operation with the operation unit 3, a shift position is shifted to "P", or the engine is turned off. The end condition may be in a situation in which the autonomous driving assistance cannot be continued.

If it is determined that the assisted traveling by the autonomous driving assistance is ended (YES in S10), the driving assistance processing program is ended. On the other hand, if it is determined that the assisted traveling by the autonomous driving assistance is not ended (NO in S10), the processing returns to S2, and the assistance image is continuously displayed on the liquid crystal display 4.

As described above in detail, according to the driving assistance device 1 of the present embodiment and the computer program executed by the driving assistance device 1, a bird's-eye view image generated from a captured image obtained by capturing an image of the surroundings of the vehicle is acquired as a vehicle surrounding image in which the surroundings of the vehicle are visually recognized from a set viewpoint (S2), an object of attention, which is an object present around the vehicle and requiring attention for the vehicle, is detected (S3), a model image indicating an appearance of the object of attention is acquired (S6), an assistance image in which the model image 55 is synthesized with a vehicle surrounding image according to a position of the object of attention is generated (S7), the generated assistance image is displayed on the liquid crystal display 4 (S9), and the vehicle surrounding image excluding the model image 55 is displayed such that a luminance difference or a contrast ratio with the model image 55 included in the assistance image increases stepwise as a distance from the set viewpoint increases (S8). Therefore, the visibility of the model image 55 can be improved. As a result, it is possible to allow the user to more reliably recognize the object of attention around the vehicle.

Since the vehicle surrounding image excluding the model image is displayed in a single color in a stepwise manner as the distance from the viewpoint increases, it is possible to make the model image 55 stand out even when the model image 55 is synthesized with the vehicle surrounding image.

Since the vehicle surrounding image is a bird's-eye view image obtained by viewing, using a virtual viewpoint in the sky as the set viewpoint, the surroundings of the vehicle in an oblique direction from the viewpoint, even when the model image 55 in the line-of-sight direction overlaps the vehicle surrounding image behind the model image 55, it is possible to improve the visibility of the model image 55 as the vehicle surrounding image behind the model image 55 has a single color.

After the vehicle speed of the vehicle is acquired, the position of the viewpoint in the vehicle surrounding image, the line-of-sight direction when the surroundings of the vehicle are visually recognized from the viewpoint, or a display start position at which the display is performed such that the luminance difference or the contrast ratio increases is set based on the vehicle speed of the vehicle. Therefore, in a situation in which it is necessary to grasp a distant object of attention, it is possible to grasp the distant object of attention using the model image. In contrast, in a situation in which it is necessary to grasp a nearby object of attention, it is possible to grasp the nearby object of attention using the model image.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

For example, in the present embodiment, the vehicle surrounding image displayed on the liquid crystal display 4 is a bird's-eye view image or an overhead image generated by processing the captured images captured by cameras including the front, rear, left, and right cameras, but may be the captured images themselves captured by the cameras. For example, the captured image of the front camera 6 may be used. In this case, the model image 55 is synthesized with the captured image in S7, and the gradation processing is performed on the captured image in S8. The viewpoint of the vehicle surrounding image displayed on the liquid crystal display 4 at that time is the viewpoint of the camera.

In the present embodiment, it is assumed that the assistance image 60 illustrated in Fig. 7 is displayed while traveling by the autonomous driving assistance is performed, but the assistance image 60 illustrated in Fig. 7 may be displayed even while traveling by manual driving is performed.

In the present embodiment, the processing of the driving assistance processing program (Fig. 3) is executed by the driving assistance ECU 10 of the driving assistance device 1, and an execution entity can be changed as appropriate. For example, a control unit of the liquid crystal display 4, a vehicle control ECU, a control unit of a navigation device, and other in-vehicle devices may execute the processing.

## Claims

1. A driving assistance device (1) comprising:
a vehicle surrounding image acquisition unit (10) configured to acquire a captured image obtained by capturing an image of surroundings of a vehicle (2) or an image obtained by processing the captured image, as a vehicle surrounding image in which the surroundings of the vehicle are visually recognized from a set viewpoint;
an object detection unit (10) configured to detect an object of attention, which is an object present around the vehicle and requiring attention for the vehicle;
a model image acquisition unit (10) configured to acquire a model image (55, 63 to 67) indicating an appearance of the object of attention;
an assistance image generation unit (10) configured to generate an assistance image (60) in which the model image is synthesized with the vehicle surrounding image according to a position of the object of attention; and
an image display unit (10) configured to display the assistance image on a display device (4), wherein
the image display unit displays the vehicle surrounding image excluding the model image such that a luminance difference or a contrast ratio with the model image included in the assistance image increases in a stepwise manner as a distance from the viewpoint increases.

2. The driving assistance device according to claim 1, wherein
the image display unit displays the vehicle surrounding image excluding the model image such that the luminance difference or the contrast ratio with the model image included in the assistance image increases by displaying the vehicle surrounding image in a single color in a stepwise manner as the distance from the viewpoint increases.

3. The driving assistance device according to claim 1, wherein
the vehicle surrounding image is a bird's-eye view image obtained by viewing, using a virtual viewpoint in the sky as the set viewpoint, the surroundings of the vehicle down in an oblique direction from the viewpoint.

4. The driving assistance device according to any one of claims 1 to 3, further comprising:
a vehicle speed acquisition unit (10) configured to acquire a vehicle speed of the vehicle, wherein
a position of the viewpoint, a line-of-sight direction when the surroundings of the vehicle are visually recognized from the viewpoint, or a display start position at which the display is performed such that the luminance difference or the contrast ratio with the model image increases is set based on the vehicle speed of the vehicle.
